## Europäisches Patentamt

## European Patent Office

## Office européen des brevets

(11) Veröffentlichungsnummer: **0 219 672**
**B1**

(12) **EUROPÄISCHE PATENTSCHRIFT**

(45) Veröffentlichungstag der Patentschrift:
**17.11.88**

(51) Int. Cl.⁴: **B 60 R 13/06**

(21) Anmeldenummer: **86112454.3**

(22) Anmeldetag: **09.09.86**

(54) **Fahrzeugkarosserie.**

(30) Priorität: **02.10.85 DE 3535192**

(43) Veröffentlichungstag der Anmeldung:
**29.04.87 Patentblatt 87/18**

(45) Bekanntmachung des Hinweises auf die Patenterteilung:
**17.11.88 Patentblatt 88/46**

(84) Benannte Vertragsstaaten:
**DE FR GB IT SE**

(56) Entgegenhaltungen:
**DE - A - 3 411 559**
**GB - A - 951 034**
**GB - A - 1 522 347**

**PATENTS ABSTRACTS OF JAPAN, Band 9, Nr. 202**
**(M-405)[1925], 20. August 1985; & JP-A-60 64 023**
**(KINUGAWA GOMU KOGYO K.K.) 12.04.1985**

(73) Patentinhaber: **BAYERISCHE MOTOREN WERKE**
**Aktiengesellschaft, Postfach 40 02 40,**
**D-8000 München 40 (DE)**

(72) Erfinder: **Ball, Wilfried, Breslauerstrasse 24,**
**D-8312 Dingolfing (DE)**

**Beschreibung**

Die Erfindung bezieht sich auf eine Fahrzeugkarosserie mit einem Türausschnitt und einer darin schwenkbar angeordneten Fahrzeugtür nach dem Oberbegriff des Hauptanspruchs.

Aus aerodynamischen Gründen sind luftwirbelbildende Übergänge zwischen der Fahrzeugtür und den Karossierbereichen, die den Türauschnitt bilden, unerwünscht. Es soll möglichst ein bündiger Übergang zwischen diesen Teilen bestehen. Dieses Erfordernis lässt sich durch eine besonders gestaltete Dichtlippe der Türdichtungsleiste verwirklichen.

Die deutsche DE-A-3 411 559 mit Offenlegungstag vom 10. 10. 1985 zeigt eine solche Anordnung. Der Gegenstand dieser Anmeldung verfolgt an sich eine andere Zielrichtung und dementsprechend ist die besagte Dichtlippe nicht in ihren Einzelheiten beschrieben. Insbesondere lässt sich nicht genau entnehmen, wie sie sich an die Zierleisten anlegt.

Es hat sich aber gezeigt, dass durch die unterschiedliche Höhenlage der fertig montierten Fahrzeugtür, bedingt durch die Karosserietoleranzen und damit der unterschiedlichen Lage der Türanschraublöcher, die Dichtungslippe je nach Toleranzabweichung einmal unter die Zierleiste wandert oder aber eine zu grosse Breite der Zierleiste überdeckt. Im letzteren Fall steht sie möglicherweise mit ihrer Oberkante auch noch von der Zierleiste ab, was aus aerodynamischen Gründen wiederum unerwünscht ist.

Aufgabe der Erfindung ist es, eine gattungsgemässe Fahrzeugkarosserie so auszubilden, dass der Übergangsspalt zwischen Fahrzeugtür und Türausschnitt sowohl in aerodynamischer als auch in optischer Hinsicht zufriedenstellend überbrückt ist.

Die Aufgabe wird erfindungsgemäss gelöst mit einer Zierleiste, wie sie mit den kennzeichnenden Merkmalen des Hauptanspruchs beschrieben ist.

Durch ihre Unterteilung erlaubt die Zierleiste das Anlegen der Dichtlippe in unterschiedlichen Höhen, ohne dass dadurch die aerodynamischen Verhältnisse merklich beeinflusst werden. Ausserdem weist die Zierleiste eine immer gleich breite sichtbare Zierleistenoberfläche auf, was einen qualitativ guten Eindruck vermittelt. Schliesslich führt die Erfindung zu Kosteneinsparungen, da einmal die Toleranzgrenzen weiter gesteckt und damit die Herstellungskosten gesenkt werden können, andererseits Nacharbeiten weitgehend wegfallen.

Nachfolgend ist anhand der Zeichnung ein vorteilhaftes Ausführungsbeispiel der Erfindung näher beschrieben. Es zeigen

Fig. 1 eine Fahrzeugkarosserie im Bereich der Dachoberkante mit geschlossener Fahrzeugtür nach dem Stand der Technik und

Fig. 2 den selben Abschnitt der Fahrzeugkarosserie mit einer der Erfindung entsprechenden Zierleiste.

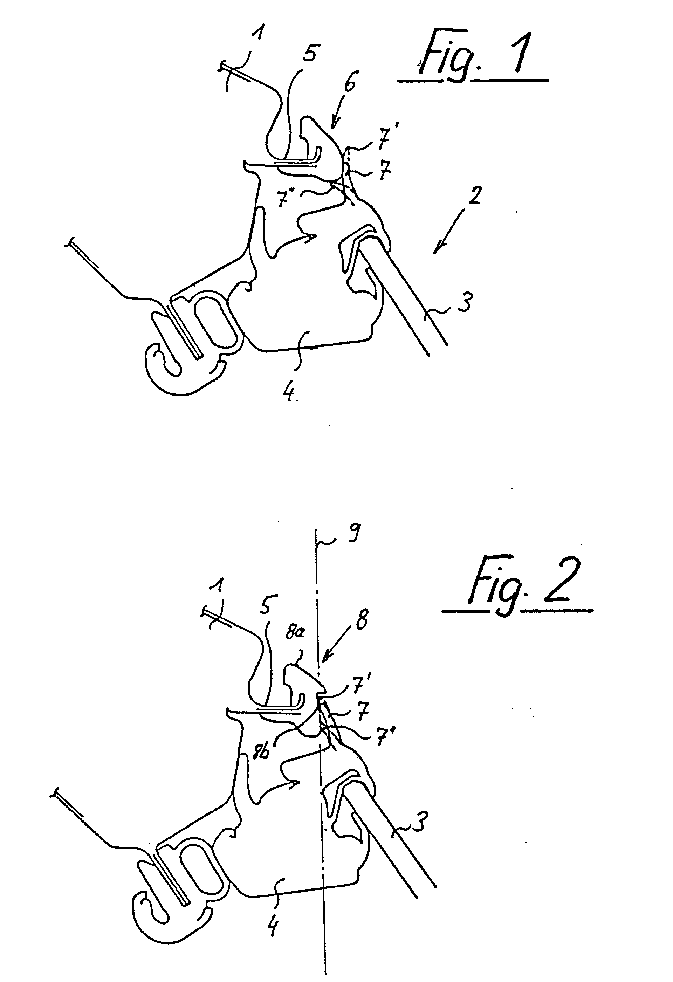

Die Figuren zeigen die Fahrzeugkarosserie nur insoweit, als sie für das Verständnis der Erfindung von Interesse ist. Entsprechend deutet Fig. 1 das Querschnittprofil eines Dachlängsträgers 1 an, der die Oberkante eines nicht weiter erkennbaren Türausschnittes darstellt. Der Türausschnitt nimmt schwenkbar eine Fahrzeugtür 2 auf, von der wiederum nur eine Fensterscheibe 3 und eine Dichtungsleiste 4 erkennbar ist. Die Dichtungsleiste 4 wird von einem nicht weiter dargestellten Türrahmen gehalten, dabei kann die Befestigung ähnlich der in der DE-A-3 411 559 gezeigten Art sein.

Der Dachrahmen 1 geht in seinem äusseren einsehbaren Bereich in eine Dachrinne 5 über, die eine insgesamt mit 6 bezeichnete Zierleiste trägt. An den unteren äusseren Rand der Zierleiste 6 legt sich eine Dichtlippe 7 der Dichtungsleiste 4 an.

In Fig. 1 ist mit durchgehendem Strich die ideale Lage der Dichtungslippe 7 an der Zierleiste 6 gezeichnet. In diesem Fall ist der Übergang zwischen Dichtungsleiste und Zierleiste nahezu bündig. Durch Toleranzschwankungen der Karosserie und damit der Anschraublöcher für die Türscharniere stellen sich Streuungen in der Höhenlage der Dichtlippe 7 ein. In Fig. 7 sind diese in gestrichelter Weise dargestellt. In dem einen Fall, mit 7' bezeichnet, geht die Oberkante der Dichtlippe über die Ideallage hinaus und steht etwas von der Zierleiste 6 ab. Dadurch ergeben sich schlechtere aerodynamische Verhältnisse. Ausserdem wird, da die Dichtungsleiste in der Regel als schwarzes Gummiteil ausgelegt ist, der optische Bereich der chromglänzenden Zierleiste 6 geschmälert. In ungünstigen Fällen kann diese optische Verschmälerung über die Länge immer mehr zunehmen, was dann den Eindruck vermittelt, als ob die Tür schief im Türausschnitt hängt. Schliesslich wird die Dichtlippe 7' stärker nach aussen gebogen als die ideal liegende Dichtlippe 7, was zu vorzeitigem Verschleiss führen kann.

Mit 7'' ist ebenfalls gestrichelt eine Dichtlippe gezeigt, die eine zu tiefe Lage einnimmt. Die Dichtlippe 7' wandert dabei unter die Zierleiste 6, was wiederum in aerodynamischer Hinsicht eine Verschlechterung zur Folge hat. Ausserdem erhöht sich dadurch die Schliesskraft der Fahrzeugtür und ebenso ist eine Dichtkraftveränderung gegeben. Schliesslich verschleisst eine so stark gebogene Dichtlippe erheblich schneller.

In Fig. 2 ist wiederum der gleiche Dachabschnitt erkennbar. Auch hier ist die Dichtungsleiste mit 4 gekennzeichnet, jedoch trägt die Zierleiste nunmehr die Bezugsziffer 8. Die Zierleiste 8 weist einen oberen Abschnitt 8a auf, der die eigentliche sichtbare Zierleistenoberfläche darstellt. Er ist gewöhnlich verchromt. Darunter schliesst sich ein zurückgesetzter Dichtungsabschnitt 8b ab. Dieser Dichtungsabschnitt 8b ist in Richtung einer Türanschlaglinie 9 ausgerichtet, die entweder mit der Schwenkachse der Fahrzeugtür zusammenfällt oder parallel zu ihr verläuft. In Fig. 2 ist wiederum die Ideallage der Dichtlippe 7 in einem ausgezogenen Strich dargestellt, während die unterschiedlichen Höhenlagen, bedingt durch die Karosserietoleranzen, gestrichelt und in der höheren Lage mit 7' und in der tieferen Lage mit 7'' bezeichnet sind. Es lässt sich aus dieser Figur leicht erkennen, dass die Dichtlippe auch bei unteschiedlichen Höhenlagen sich jedes Mal gegen den Dichtungsabschnitt 8b anlegt. Dabei muss selbstverständlich die vertikale Länge dieses Dichtungsabschnitts 8b wenigstens gleich oder grösser als der zulässige Toleranzbereich der Karosserieabschnitte bzw. der Fahrzeugtür sein.

Der Dichtungsabschnitt 8b ist zweckmässigerweise an seiner Oberfläche schwarz lackiert, so dass bei flüchtigem Hinschauen nicht erkannt wird, welche Höhenlage die Dichtungslippe einnimmt. Der Betrachter wird vielmehr nur die in ihrer Breite stets gleichbleibende Zierleistenoberfläche 8a bemerken. Aus Fig. 2 ist aber auch erkennbar, dass unabhängig von der Höhenlage der Dichtungslippe der Übergang zwischen Dichtungsleiste und Zierleiste in allen Fällen nahezu gleich ist, so dass sich aerodynamische Abweichungen nicht einstellen werden. Ebenso ist keine Veränderung der Dicht- und Schliesskraft gegeben.

## Patentanspruch

Fahrzeugkarosserie mit einem Türausschnitt und einer darin schwenkbar angeordneten Fahrzeugtür (2), wobei die von aussen einsehbaren Randbereiche des Türausschnitts wenigstens teilweise eine Zierleiste (6, 8) aufweisen, an die sich eine Dichtlippe (7) einer an dem Rahmen der Fahrzeugtür (2) befestigten Dichtungsleiste (4) bei geschlossener Fahrzeugtür (2) anlegt, dadurch gekennzeichnet, dass die Zierleiste (8) gebildet ist aus einem oberen Abschnitt (8a) mit sichtbarer Zierleistenoberfläche und einem unteren zurückversetzten Dichtungsabschnitt (8b) für die Anlage der Dichtungslippe (7), der in etwa parallel zu der Schwenkachse (Scharnieranschlaglinie 9) der Fahrzeugtür ausgerichtet ist.

## Claim

A vehicle body having a door aperture and a vehicle door (2) pivotably arranged therein, wherein the marginal zones of the door aperture which can be seen from the exterior comprise, at least in part, an embellishing strip (6, 8) against which a sealing lip (7) of a sealing strip (4) secured to the frame of the vehicle door (2) is applied when the vehicle door (2) is closed, characterised in that the embellishing strip (8) is formed with an upper section (8a) with a visible embellishing strip surface and a lower, set-back, sealing section (8b) for the abutment of the sealing lip (7), which sealing section is aligned approximately parallel with the pivot axis (hinge abutment line 9) of the vehicle door.

## Revendication

Carrosserie de véhicule, avec une échancrure de porte et une porte de véhicule (2) qui est disposée de manière pivotante à l'intérieur, les zones de bordure d'échancrure de porte qui sont visibles de l'extérieur possédant au moins partiellement un enjoliveur (6, 8), sur lequel s'appuie une lèvre d'étanchéité (7) d'une languette d'étanchéité (4), qui est fixée sur le cadre de la porte de véhicule (2), dans le cas où la porte de véhicule (2) est fermée, caractérisé en ce que l'enjoliveur (8) est formé à partir d'une section supérieur (8a), à surface visible d'enjoliveur et d'une section d'étanchéité (8b) inférieure en retrait, pour l'appui de la lèvre d'étanchéité (7), qui est orientée approximativement parallèlement à l'axe de pivotement (ligne de butée de charnière 9) de la porte de véhicule.

Fig. 1

Fig. 2